# EUROPÄISCHE PATENTSCHRIFT

(11) **EP 2 069 104 B1**
(45) Veröffentlichungstag und Bekanntmachung des Hinweises auf die Patenterteilung: **09.06.2010**
(21) Anmeldenummer: 07817619.5
(22) Anmeldetag: 01.10.2007
(51) Int. Cl.: B23Q 5/34, B23Q 11/00

(54) **RUCKENTKOPPELTE ANTRIEBSACHSE**
DRIVE SPINDLE ISOLATED FROM ABRUPT MOVEMENT
ARBRE D'ENTRAÎNEMENT À DÉCOUPLAGE D'IMPULSIONS

(30) Priorität: 04.10.2006 DE 102006046974
(43) Veröffentlichungstag der Anmeldung: 17.06.2009
(73) Patentinhaber: Gottfried Wilhelm Leibniz Universität Hannover, 30167 Hannover (DE)
(72) Erfinder: DENKENA, Berend, 30900 Wedemark (DE); HESSE, Peter, 31789 Hameln (DE)
(74) Vertreter: Plöger, Jan Manfred
(86) Internationale Anmeldenummer: PCT/DE2007/001777
(87) Internationale Veröffentlichungsnummer: WO 2008/040336

(56) Entgegenhaltungen:
- EP-A- 1 247 613
- DE-A1- 19 810 996

## Beschreibung

Die Erfindung betrifft eine Antriebsachse gemäß dem Oberbegriff von Anspruch 1 und ein Verfahren zum Betreiben einer Antriebsachse.

Gattungsgemäße Antriebsachsen sind aus der DE 198 10 996 A1, der DE 101 17 460 A1 und der WO 99/48191 bekannt. Derartige Antriebsachsen werden beispielsweise an Gestellen von Werkzeugmaschinen befestigt und dienen dazu, die Übertragung eines Rucks oder Impulses auf das Gestell zu verringern und so eine Anregung von Schwingungen des Gestells zu reduzieren. Das einer ruckentkoppelten Antriebsachse zugrunde liegende Prinzip ist in der DE 198 10 996 A1 ausführlich beschrieben.

Nachteilig an derartigen Antriebsachsen ist, dass diese aufwändig zu fertigen sind, da die Führung des Abtriebteils an dem Gestell präzise zu der Führung des Reaktionskörpers am Gestellt ausgerichtet sein muss. Es ist daher auch schwierig, bestehende Werkzeugmaschinen nachzurüsten.

Der vorliegenden Erfindung liegt die Aufgabe zugrunde, eine Antriebsachse vorzuschlagen, die einfach zu fertigen ist und eine leichte Nachrüstung bestehender Werkzeugmaschinen erlaubt.

Die Erfindung löst das Problem durch eine gattungsgemäße Antriebsachse mit den Merkmalen von Anspruch 1 und ein Verfahren mit den Merkmalen von Anspruch 12.

Vorteilhaft an der Erfindung ist, dass vom Motor aufgebrachte Kräfte zwischen dem Abtriebsteil und dem Reaktionskörper nicht zu einer Verformung der Führungsschiene führen können. Verformungen der Führungsschiene begrenzen die Positioniergenauigkeit des Abtriebsteils. Durch die Erfindung werden daher bei gleichem Ruck höhere Genauigkeiten erreicht. Dem korrespondierend können bei einer vorgegebenen Genauigkeit für das Abtriebsteil höhere Ruckwerte toleriert werden. Das erhöht die Produktivität, bzw. die Genauigkeit einer Maschine in die eine derartige Antriebsachse eingebaut ist, beispielsweise die einer Werkzeugmaschine oder eines Roboters.

Vorteilhaft ist zudem, dass der Motor von der Führungsschiene beabstandet angeordnet werden kann. Vom Motor abgegebene Verlustwärme kann daher die Führungsschiene nicht oder nur zu einem sehr geringen Teil erwärmen. Das wiederum führt zu geringen Ungenauigkeiten aufgrund von thermischer Ausdehnung der Führungsschiene.

Ein Vorteil ist des Weiteren, dass eine Reaktionskörperführung, in der der Reaktionskörper geführt ist, lediglich die Gewichtskraft des Reaktionskörpers aufzunehmen hat und nicht wie bei bekannten Antriebsachsen auch noch die Gewichtskraft des Abtriebteils. Das führt zu einer geringen Reibung in der Reaktionskörperführung und damit zu geringer Verlustwärme.

Vorteilhaft ist außerdem, dass an die Steifigkeit der Reaktionskörperführung im Vergleich zu der Steifigkeit der Führungsschiene geringere Anforderungen gestellt werden können, so dass sie leichter und kostengünstiger ausgeführt werden kann.

Günstig ist außerdem, dass dann, wenn als Motor ein elektrischer Linearmotor verwendet wird, zwischen einem Primärteil und einem Sekundärteil des Linearmotors wirkende Kräfte nicht auf die Führungsschiene wirken und so die Positioniergenauigkeit des Abtriebskörpers nicht beeinflussen.

,Ein weiterer Vorteil ist, dass die Führungsschiene dann, wenn sie mit einem ortsfesten Gestell fest verbunden ist, mit einer hohen Steifigkeit konstruiert werden kann, ohne dass eine daraus resultierende höhere Masse die Dynamik der Antriebsachse negativ beeinflusst. Das führt zu einer zusätzlichen Erhöhung der Positioniergenauigkeit des Abtriebsteils.

Im Rahmen der vorliegenden Beschreibung wird unter einer Antriebsachse insbesondere eine Translationsachse zum Ausführen einer translatorischen Bewegung oder eine Rotationsachse zum Ausführen einer Drehbewegung verstanden. Die Antriebsachse ist bevorzugt als ruckentkoppelte oder, was gleichbedeutend ist, als impulsentkoppelte Antriebsachse ausgebildet, bei der nur ein vorgegebener Bruchteil des Rucks oder Impulses des Abtriebsteils auf ein Gestell übertragen wird, an dem die Antriebsachse montiert ist. Dieser vorgegebene Bruchteil liegt beispielsweise bei 10%, insbesondere bei 1%.

Unter einem Abtriebsteil wird allgemein ein Maschinenelement verstanden, das eine translatorische oder rotatorische Bewegung auf ein Werkstück oder ein weiteres Maschinenelement übertragen kann. Es kann sich dabei beispielsweise um eine Werkzeugaufnahme, einen Achstisch oder einen Greifer handeln.

Unter einer Führungsschiene wird im Rahmen der vorliegenden Beschreibung auch eine mehrteilige Führungsschiene verstanden. Beispielsweise kann die Führungsschiene aus zwei Führungsschienen-Elementen bestehen, die parallel zueinander verlaufen. Die Führungsschiene muss nicht die einzige Lagerung für das Abtriebsteil darstellen, sie ist jedoch die primäre Führung, die einen überwiegenden Bruchteil der Gewichtskraft des Abtriebsteils aufnimmt. Die Führungsschiene nimmt insbesondere im Wesentlichen die gesamte Gewichtskraft des Abtriebsteils auf, beispielsweise mehr als 90%. Das Abtriebsteil ist an der Führungsschiene unmittelbar gelagert. Das heißt, dass es insbesondere möglich ist, den Reaktionskörper relativ zu dem Gestell zu bewegen, wenn das Abtriebsteil relativ zum Gestell festgelegt ist.

Bei der Antriebsachse handelt es sich bevorzugt um eine Werkzeugmaschinen-Antriebsachse, die Antriebsachse kann jedoch auch beispielsweise in Robotern oder in anderen Maschinen montiert sein, bei denen die Übertragung eines Rucks vermindert werden soll.

Bevorzugt sind das Abtriebsteil, der Reaktionskörper und der Motor so angeordnet, dass der Motor die Kraft zwischen Abtriebsteil und Reaktionskörper in der Nähe des Schwerpunkts des Abtriebsteils aufbringt. Hierdurch werden auf die Führungsschiene wirkende Kippmomente verringert.

In einer bevorzugten Ausführungsform ist der Motor ein elektrischer Linearmotor, der ein Primärteil und Sekundärteil umfasst. Der Linearmotor umfasst zudem einen Stator, der mit dem Abtriebsteil starr gekoppelt ist. Der Linearmotor ist bevorzugt ein Drehstrom-Wanderfeldmotor. Alternativ kann jedoch auch ein Gleichstrom-Linearmotor verwendet werden. Als günstig hat sich die Verwendung eines Synchronmotors herausgestellt, die Verwendung eines Asynchronmotors ist jedoch ebenfalls erfindungsgemäß. Als Alternative zu einem elektrischen Linearmotor kann ein Kugeigewindetrieb, ein hydraulischer Motor, ein translatorischer Schrittmotor oder ein pneumatischer Motor vorgesehen sein. Die Kraftübertragung kann berührungslos, reibschlüssig und/oder formschlüssig stattfinden.

In einer bevorzugten Ausführungsform ist das Primärteil des elektrischen Linearmotors an dem Abtriebsteil befestigt. Das ist besonders in dem Fall vorteilhaft, in dem das Abtriebsteil eine elektrische Maschine, die beispielsweise eine Spindel, umfasst. In diesem Fall muss das Abtriebsteil zur Stromversorgung der Maschinen ohnehin mit elektrischen Zuleitungen versehen werden, so dass weitere elektrische Zuleitungen für das Primärteil nur einen geringen zusätzlichen Aufwand bedeuten.

Bevorzugt ist eine Ausführungsform, bei der Antriebsachse eine Linearmotorsteuerung umfasst, die dazu eingerichtet ist, den Linearmotor so zu bestromen, dass der Abstand zwischen dem Primärteil und dem Sekundärteil in einer x-Richtung und/oder in einer y-Richtung ohne mechanische Führung innerhalb eines vorgegebenen Abstandsintervalls bzw. innerhalb von zwei vorgegebenen Abstandsintervallen liegt. Bei einer Werkzeugmaschinen-Antriebsachse wird nach allgemeiner Konvention die z-Achse als die Hauptvorschubachse definiert. Dementsprechend verläuft auch die Reaktionsrichtung des Reaktionskörpers in z-Richtung. Der Reaktionskörper muss entsprechend in einer senkrecht zur z-Richtung liegenden x-Richtung und in der zu beiden senkrecht stehenden z-Richtung geführt werden. Durch Vorsehen der geeignet eingerichteten Linearmotorsteuerung ist es möglich, auf weitere Lager für den Reaktionskörper zu verzichten, was zu einer verminderten Reibung führt. Hieraus resultieren ein geringerer Verschleiß und eine geringere Wärmeentwicklung.

In einer bevorzugten Ausführungsform ist das Abtriebsteil an der Führungsschiene linear geführt. Alternativ ist es jedoch auch möglich, dass das Abtriebsteil an der Führungsschiene auf einer Kreisbahn oder sogar auf einer beliebig geformten ebenen Kurve geführt ist.

Besonders vorteilhaft ist, wenn der Reaktionskörper ausschließlich bzw. im Wesentlichen ausschließlich am Abtriebsteil geführt ist. Erfindungsgemäß ist dabei eine insbesondere lineare Führung des Reaktionskörpers im Abtriebsteil. Vorteilhaft hieran ist, dass die Antriebsachse dann nur noch über die Führungsschiene mit dem Gestell gekoppelt ist. Das ermöglicht einen mechanisch einfachen Aufbau und eine einfache Nachrüstung insbesondere von Werkzeugmaschinen mit einer erfindungsgemäßen Antriebsachse.

Um bei einem Stromausfall zu verhindern, dass sich ein mit einer hohen Geschwindigkeit relativ zum Abtriebskörper bewegender Reaktionskörper unkontrolliert bewegt und es zu Beschädigungen der Reaktionskörperführung kommt, ist der Reaktionskörper bevorzugt mittels einer Reaktionskörperlinearführung an dem Abtriebsteil gelagert, wobei die Reaktionskörper-Linearführung zwei Führungselemente umfasst und eines der Führungselemente das andere Führungselement umgreift. Hierdurch wird sichergestellt, dass der Reaktionskörper sich zu dem Abtriebsteil nur bis zu einem vorgegebenen Abstand in X- bzw. y-Richtung bzw. z-Richtung entfernen kann. Für die Führung des Abtriebsteils an der Führungsschiene und/oder der Reaktionskörperführung kann eine Wälzführung und/oder eine Magnetführung und/oder eine aerostatische Führung und/oder eine hydraulische Führung und/oder eine Führung mittels elastischer Festkörperelemente und/oder eine Führung mittels eines elastischen Gelenks vorgesehen sein.

Eine erfindungsgemäße Werkzeugmaschine umfasst eine ruckentkoppelte Antriebsachse, mit einem Abtriebsteil, einem Reaktionskörper und einem Motor zum Aufbringen einer Kraft zwischen dem Abtriebsteil und dem Reaktionskörper, wobei der Reaktionskörper und das Abtriebsteil so relativ zueinander angeordnet sind, dass durch Aufbringen der Kraft das Abtriebsteil und der Reaktionskörper in im Wesentlichen entgegengesetzte Reaktionsrichtungen bewegbar sind, wobei das Abtriebsteil an einer mit der Werkzeugmaschine fest, insbesondere starr, verbundenen Führungsschiene geführt ist.

Eine erfindungsgemäße Werkzeugmaschine umfasst bevorzugt eine sekundäre Lagerung bzw. Führung für den Reaktionskörper an dem Gestell. Insbesondere nimmt diese sekundäre Lagerung nur einen Bruchteil der Gewichtskraft des Reaktionskörpers auf, beispielsweise weniger als 25%. Die sekundäre Lagerung ist hingegen insbesondere nicht als Führung des Abtriebskörpers ausgebildet und nimmt im Wesentlichen keine Gewichtskraft des Abtriebskörpers auf.

An der sekundären Lagerung ist vorteilhaft, dass insbesondere bei langen Reaktionskörpern Schwingungen, die nicht in die Reaktionsrichtung verlaufen, gedämpft oder weitgehend unterdrückt werden können. Insbesondere ist bevorzugt, den Reaktionskörper an mindestens einem Ende seiner Längsausdehnung über ein Dämpfungselement mit dem Gestell zu koppeln bzw. es an dem Gestell zu lagern. Hierzu sind beispielsweise Gleitführungen, Wälzführungen, Magnetführungen, aerostatische und/oder hydraulische Führungen sowie elastische Festkörpergelenke einsetzbar.

In einer bevorzugten Ausführungsform ist der Reaktionskörper über eine Feder und/oder einen Dämpfer mit dem Gestell verbunden, wobei die Feder und/oder der Dämpfer in der Reaktionsrichtung wirken. Besonders günstig ist, wenn der Dämpfer eine zumindest auch zur Geschwindigkeit des Reaktionskörpers proportionale Dämpfung aufweist. Die Feder wird beispielsweise so gewählt, dass das schwingungsfähige System aus Reaktionskörper, Feder und ggf. dem Dämpfer eine Eigenfrequenz von unter 100 Hz aufweist.

Um über einen längeren Zeitraum eine konstante Kraft auf das Antriebsteil aufbringen zu können, ist gemäß einer bevorzugten Ausführungsform der Erfindung ein Zusatzmotor zum Aufbringen einer Kraft zwischen Reaktionskörper und Gestell vorgesehen. Ein derartiger Motor ist bevorzugt wiederum ein elektrischer Linearmotor.

Ein bevorzugtes Verfahren umfasst bevorzugt den zusätzlichen Schritt des Ansteuerns des Motors so, dass der Ruck des Gestells einen voreingestellten Grenzwert nicht übersteigt. Zusätzlich umfasst das Verfahren bevorzugt den Schritt des Erfassens einer Position des Reaktionskörpers relativ zum Abtriebsteil und/oder relativ zum Gestell und ein Ansteuern des Motors in Abhängigkeit von dieser Position. Um beispielsweise eine konstante Kraft auf das Abtriebsteil aufzubringen, kann ein erfindungsgemäßes Verfahren den Schritt umfassen, den Reaktionskörper relativ zu dem Gestell an eine Position zu verfahren, in der die Federn zwischen dem Reaktionskörper und dem Gestell eine Kraft zwischen beiden ausübt, die im Wesentlichen der aufzubringenden konstanten Kraft entspricht. Alternativ oder additiv umfasst ein erfindungsgemäßes Verfahren den Schritt des Ansteuerns des zusätzlichen Motors zwischen dem Reaktionskörper und dem Gestell so, dass die gewünschte konstante Kraft auf das Abtriebsteil aufgebracht wird.

Im Folgenden wird die Erfindung anhand der Zeichnungen näher erläutert. Dabei zeigt:
- Figur 1: einen Querschnitt durch eine erfindungsgemäße Antriebsachse,
- Figur 2: eine Seitenansicht der Antriebsachse gemäß Figur 1,
- Figur 3: eine zweite Ausführungsform einer erfindungsgemäßen An- triebsachse im Querschnitt,
- Figur 4: eine Seitenansicht der Antriebsachse gemäß Figur 3, und
- Figur 5: eine Seitenansicht einer dritten Ausführungsform einer erfin- dungsgemäßen Antriebsachse.

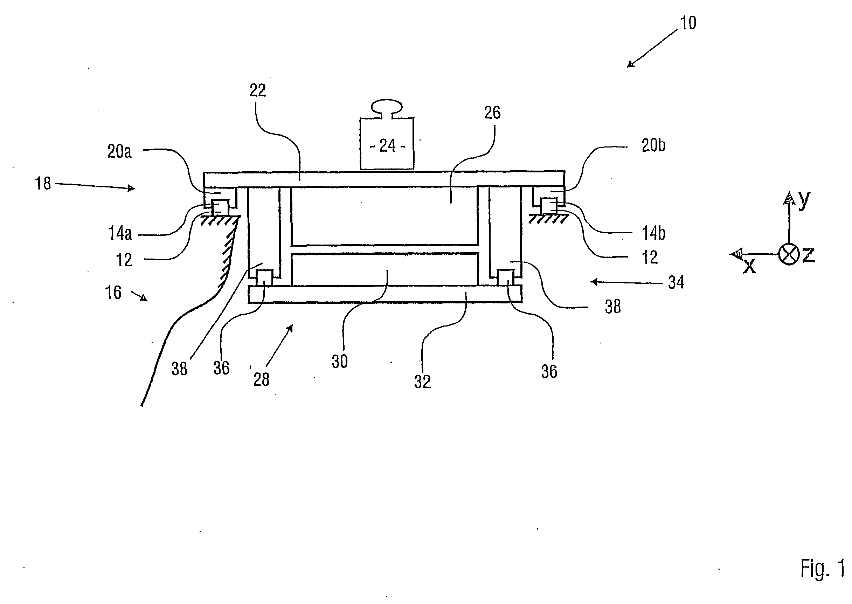

Figur 1 zeigt eine erfindungsgemäße Antriebsachse 10, die eine horizontal angeordnete Führungsschiene 12 umfasst, die aus zwei parallel zueinander verlaufenden Führungsschienenelementen 14a, 14b besteht und fest mit einem schematisch eingezeichneten Gestell 16 einer Werkzeugmaschine in Form einer Fräsmaschine verbunden oder an dem Gestell 16 integral angeformt ist. Die Führungsschiene 12 ist als Präzisionsführung ausgebildet und weist eine hohe Steifigkeit zum Erreichen einer hohen Positioniergenauigkeit für das Abtriebsteil 18 auf.

Die Führungsschiene 12 dient der Führung eines Abtriebsteils 18. Das Abtriebsteil 18 umfasst beispielsweise vier Führungswagen 20a, 20b, 20c, 20d, von denen in Figur 1 aber nur die beiden Führungswagen 20a, 20b gezeigt sind, die mit dem jeweils zugeordneten Führungsschienenelement 14a bzw. 14b zusammenwirken. Alternativ können auch sechs, acht, zehn oder mehr Führungswagen vorgesehen sein. An den Führungswagen 20a bis 20d ist ein Tisch 22 angebracht, der mit nicht eingezeichneten Mitteln zum Befestigen eines schematisch eingezeichneten Werkstücks 24 versehen ist. An dem Tisch 22 ist ein Primärteil 26 eines Linearmotors 28 befestigt, das nicht eingezeichnete Drehstromspulen umfasst und mit einem Sekundärteil 30 zusammenwirkt, das ebenfalls nicht eingezeichnete Permanentmagneten aufweist.

Das Sekundärteil 30 ist in der in Figur 1 gezeigten Ausführungsform im Wesentlichen unterhalb des Primärteils 26 angeordnet. In alternativen Ausführungsformen ist das Sekundärteil 30 im Wesentlichen oberhalb des Primärteils 26 oder seitlich neben dem Primärteil 26 angeordnet.

Das Sekundärteil 30 ist mit einem Reaktionskörperelement 32 verbunden, das über eine Reaktionskörperführung 34 an dem Abtriebsteil 18 gelagert ist. Die Reaktionskörperführung 34 ist für hohe Kräfte und eine geringe Reibung ausgelegt und umfasst eine Reaktionskörperführungsschiene 36, die aus zwei Schienenelementen aufgebaut ist, und einen Reaktionskörperführungswagen 38, der ebenfalls aus vier nicht näher gezeigten Wagenelementen aufgebaut ist.

Das Sekundärteil 30, das Reaktionskörperelement 32 und die Reaktionskörperführungsschiene 36 sind Bestandteile eines Reaktionskörpers 40, der aufgrund der Reaktionskörperführung 34 in einer z-Richtung an dem Abtriebsteil 18 linear verschieblich geführt ist. Die Reaktionskörperführung 34 nimmt die gesamte Gewichtskraft des Reaktionskörpers 40 auf. Über die Führungsschiene 12 ist zudem das Abtriebsteil 18 ebenfalls in z-Richtung verschieblich gegenüber dem Gestell 16 geführt.

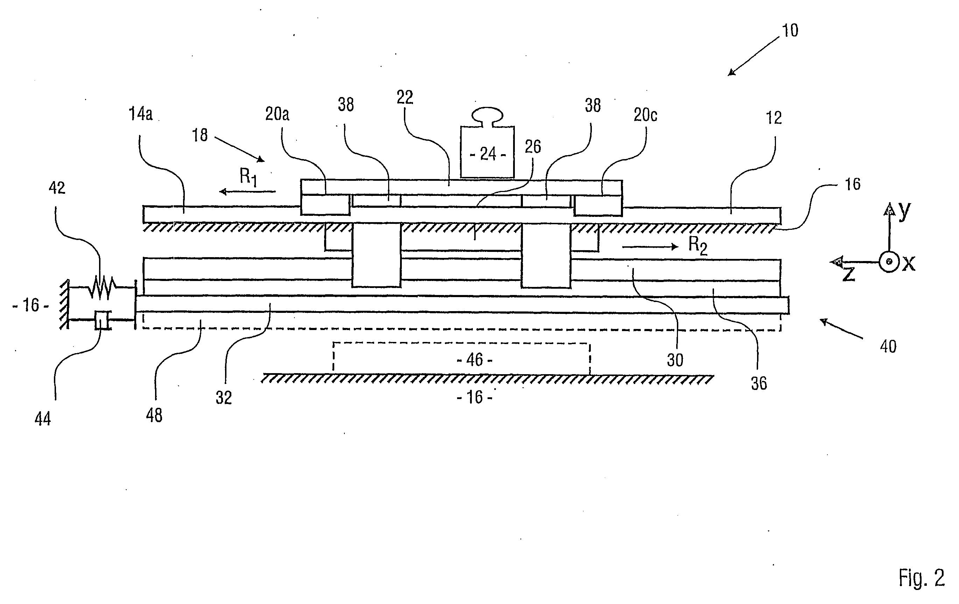

Figur 2 zeigt die Antriebsachse 10 in einer Seitenansicht. In Figur 2 ist der in Figur 1 nicht sichtbare Führungswagen 20c gezeigt, der mit dem Führungsschienenelement 14a der Führungsschiene 12 zusammenwirkt. Der Führungswagen 20d befindet sich nicht sichtbar hinter dem Führungswagen 20d.

Wenn das Primärteil 26 durch eine nicht eingezeichnete elektrische Verbindung bestromt wird, so wirkt es mit dem Sekundärteil 30 so zusammen, dass das Abtriebsteil 18 und der Reaktionskörper 40 in entgegengesetzte Reaktionsrichtungen bewegt werden, die durch Pfeile R₁ und R₂ angedeutet sind. Die Reaktionsrichtungen R₁, R₂ verlaufen parallel zu der z-Richtung.

Der Reaktionskörper 40 ist über eine Feder 42 und einen Dämpfer 44 mit dem Gestell 16 der Werkzeugmaschine verbunden, die verhindern, dass der Reaktionskörper 40 an dem Gestell 16 anschlägt. Besonders vorteilhaft ist die Feder 42 dann, wenn der Reaktionskörper 40 vertikal angeordnet ist. In diesem Fall dient die Feder 42 auch dazu, die Gewichtskraft des Reaktionskörpers 40 ganz oder teilweise abzufangen.

In einer alternativen Ausführungsform umfasst die Antriebsachse 10 ein an dem Gestell 16 befestigtes Zusatz-Primärteil 46, das mit einem an dem Reaktionskörperelement 32 befestigten Zusatz-Sekundärteil 48 zusammenwirkt. Das Zusatz-Primärteil 46 und das Zusatz-Sekundärteil 48 sind Bestandteile eines Zusatz-Linearmotors 50, mit dessen Hilfe eine entlang der z-Richtung wirkende Kraft auf den Reaktionskörper 40 aufgebracht werden kann.

Die Reaktionskörperführung 34 ist so relativ zu dem Abtriebsteil 18 angeordnet, dass eine Bewegung des Reaktionskörpers 40 unabhängig von dem Abtriebsteil 18 möglich ist. Durch den Zusatz-Linearmotor 50 kann daher der Reaktionskörper 40 relativ zu dem Abtriebsteil 18 verschoben werden, ohne dass sich das Abtriebsteil 18 relativ zu dem Gestell 16 verschiebt.

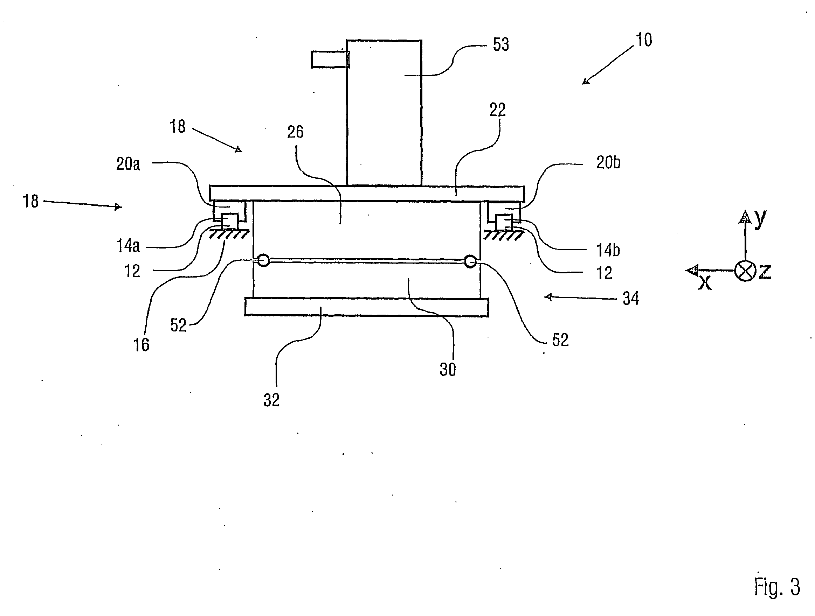

Figur 3 zeigt eine alternative Ausführungsform einer erfindungsgemäßen Antriebsachse 10, bei der das Sekundärteil 30 über ein integriertes Führungssystem 52 in Form einer kombinierten Magnet-/Wälzlagerführung mit dem Primärteil 26 verbunden ist. Das integrierte Führungssystem 52 liefert eine Führung in x-Richtung und nutzt die magnetischen Anziehungskräfte zwischen dem Primärteil 26 und dem Sekundärteil 30, so dass eine Führung in die der Anziehungskraft zwischen Primär- und Sekundärteil entgegengesetzte Richtung entbehrlich ist.

In der in Figur 3 gezeigten Ausführungsform umfasst das Abtriebsteil 18 eine schematisch gezeichnete Spindel 53, mit der ein Fräswerkzeug angetrieben werden kann. Anstelle der Spindel können andere Maschinenelemente vorgesehen sein, wie beispielsweise weitere Achsen oder Spannvorrichtungen.

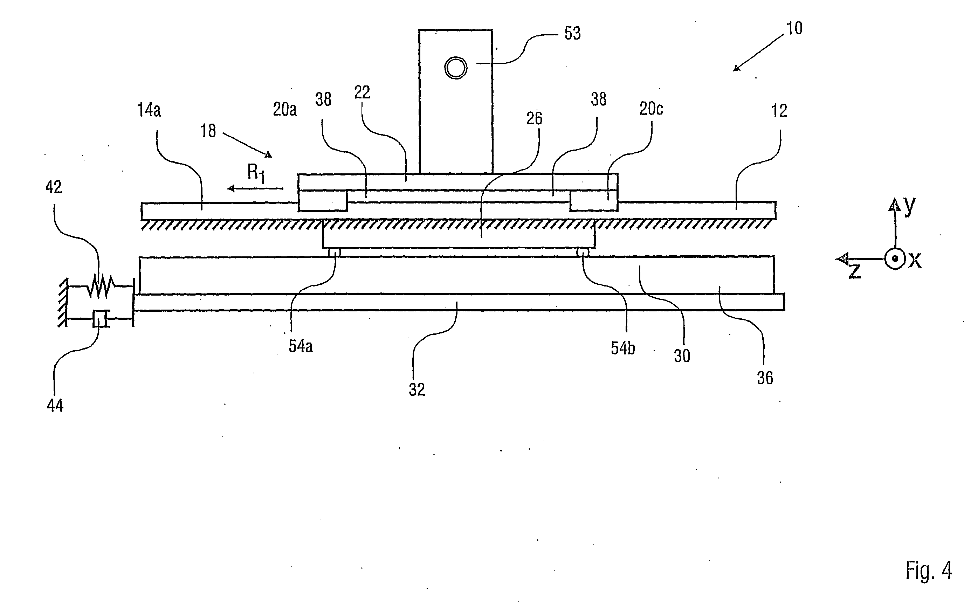

Figur 4 zeigt eine Seitenansicht der bevorzugten Ausführungsform der Antriebsachse 10 gemäß Figur 3. Zwischen dem Primärteil 26 und dem Sekundärteil 30 sind zwei Wälzkörperelemente 54a, 54b zu angeordnet, mit denen der Abstand zwischen dem Primärteil 26 und dem Sekundärteil 30 konstant gehalten wird.

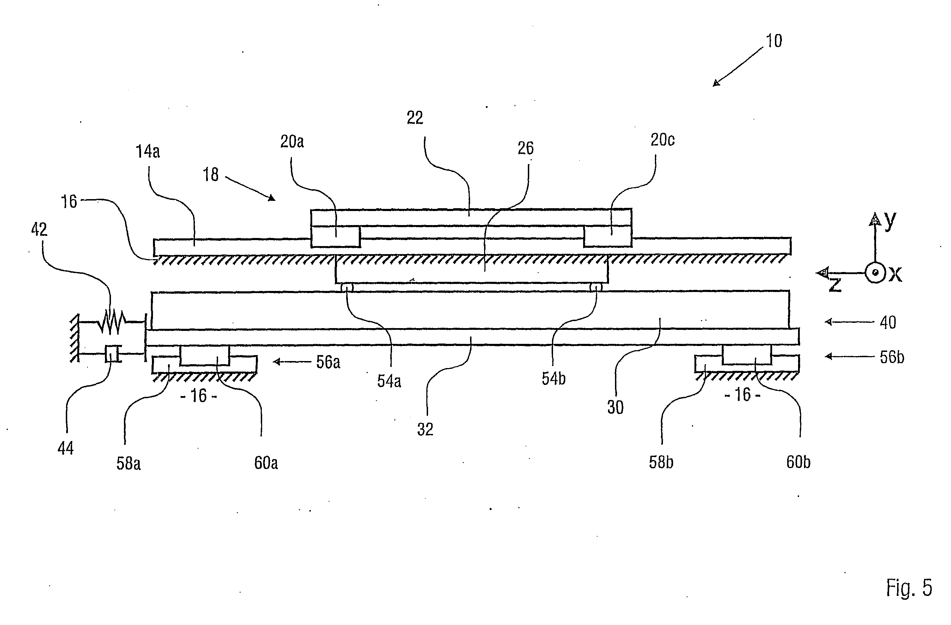

Figur 5 zeigt eine weitere erfindungsgemäße Antriebsachse 10, bei der das Reaktionskörperelement 32 des Reaktionskörpers 40 mittels Auflager 56a, 56b an dem Gestell 16 gelagert ist. Die Auflager 56a, 56b umfassen jeweils ein feststehendes Auflagerelement 58a bzw. 58b und ein am Reaktionskörperelement 32 befestigtes bewegliches Auflagerelement 60a bzw. 60b. Die Auflager 56a, 56b nehmen jeweils nur einen Bruchteil der Gewichtskraft des Reaktionskörpers 40 auf und dienen nicht der Führung des Abtriebsteil 18.

Zum Betreiben einer erfindungsgemäßen Antriebsachse wird zunächst von einer nicht eingezeichneten Maschinensteuerung eine anzufahrende Position für das Abtriebsteil 18 erfasst und die Lageänderung des Abtriebsteils 18 berechnet, die sich aus der momentanen Position und der anzufahrenden Position ergibt. Aus der momentanen Position und Geschwindigkeit des Reaktionskörpers 40 wird der Strom berechnet, mit dem der Linearmotor 25 bestromt werden muss, um die anzufahrende Position möglichst schnell zu erreichen, ohne einen voreingestellten maximalen Ruck zu überschreiten. Anschließend wird der Linearmotor mittels einer Linearmotorsteuerung mit diesem Strom bestromt. Gegebenenfalls wird zudem der Zusatz-Linearmotor bestromt, um eine Kraft auf den Reaktionskörper aufzubringen.

Die Reaktionskörperführung 34 ist hingegen auf die Aufnahme von hohen Kräften und für eine geringe Reibung ausgelegt. Da keine erhöhten Genauigkeitsanforderungen gestellt werden, kann die Reaktionskörperführung 34 zudem mit einer geringeren Steifigkeit ausgelegt sein.

### Bezugszeichenliste

- 10: Antriebsachse
- 12: Führungsschiene
- 14a, b: Führungsschienenelement
- 16: Gestell
- 18: Abtriebsteil
- 20a,b,c,d: Führungswagen
- 22: Tisch
- 24: Werkstück
- 26: Primärteil
- 28: Motor, z.B. Linearmotor
- 30: Sekundärteil
- 32: Reaktionskörperelement
- 34: Reaktionskörperführung
- 36: Reaktionskörperführungsschiene
- 38: Reaktionskörperführungswagen
- 40: Reaktionskörper
- 42: Feder
- 44: Dämpfer
- 46: Zusatz-Primärteil
- 48: Zusatz-Sekundärteil
- 50: Zusatz-Motor, z.B. Zusatz-Linearmotor
- 52: integriertes Führungssystem
- 53: Spindel
- 54a,b: Wälzkörperelement
- 56a,b: Auflager
- 58a,b: feststehendes Auflagerelement
- 60a,b: bewegliches Auflagerelement

- R₁: Reaktionsrichtung
- R₂: Reaktionsrichtung

## Patentansprüche

1. Ruckentkoppelte Antriebsachse für eine ein Gestell (16) besitzende Werkzeugmaschine, mit
(a) einem Abtriebsteil (18),
(b) einem Reaktionskörper (40) und
(c) einem Motor (28) zum Aufbringen einer Kraft zwischen dem Abtriebsteil (18) und dem Reaktionskörper (40),
wobei der Reaktionskörper (40) und das Abtriebsteil (18) so relativ zueinander angeordnet sind, dass durch Aufbringen der Kraft das Abtriebsteil (18) und der Reaktionskörper (40) in im Wesentlichen entgegengesetzte Reaktionsrichtungen (R₁, R₂) bewegbar sind,
wobei das Abtriebsteil (18) an einer Führungsschiene (12) geführt ist, die ausgebildet ist, um mit dem Gestell (16) der Werkzeugmaschine fest verbunden zu werden, **dadurch gekennzeichnet, dass** der Reaktionskörper (40) mittels einer Reaktionskörperführung (34) an dem Abtriebsteil (18) gelagert ist.

2. Ruckentkoppelte Antriebsachse nach Anspruch 1, **dadurch gekennzeichnet, dass** die Reaktionskörperführung (34) zwei Führungselemente umfasst und eines der Führungselemente das andere Führungselement umgreift.

3. Ruckentkoppelte Antriebsachse nach einem der vorstehenden Ansprüche, **dadurch gekennzeichnet, dass** die Reaktionskörperführung (34) ausgebildet ist zum Aufnehmen der gesamten Gewichtskraft des Reaktionskörpers (40).

4. Antriebsachse nach einem der vorstehenden Ansprüche, **dadurch gekennzeichnet, dass** der Motor (28) ein elektrischer Linearmotor (28) ist, der ein Primärteil (26) und ein Sekundärteil (30) umfasst und das Primärteil (26) an dem Abtriebsteil (18) befestigt ist.

5. Antriebsachse nach Anspruch 4, **dadurch gekennzeichnet, dass** die Antriebsachse (10) eine Linearmotorsteuerung umfasst, die eingerichtet ist, um den Linearmotor (28) so zu bestromen, dass der Abstand zwischen dem Primärteil (26) und dem Sekundärteil (28) in einer x-Richtung und/oder in einer y-Richtung ohne mechanische Führung innerhalb eines vorgegebenen Abstandsintervalls bzw. innerhalb von zwei vorgegebenen Abstandsintervallen liegt.

6. Antriebsachse nach einem der vorstehenden Ansprüche, **dadurch gekennzeichnet, dass** das Abtriebsteil (18) an der Führungsschiene (12) linear geführt ist.

7. Antriebsachse nach einem der vorstehenden Ansprüche, **dadurch gekennzeichnet, dass** der Reaktionskörper (40) ausschließlich am Abtriebsteil (18), insbesondere linear, geführt ist.

8. Antriebsachse nach einem der vorstehenden Ansprüche, **dadurch gekennzeichnet, dass** das Abtriebsteil (18) und/oder der Reaktionskörper (40) mittels einer Gleitführung und/oder einer Wälzführung und/oder einer Magnetführung und/oder einer aerostatischen Führung und/oder einer hydraulischen Führung und/oder mittels elastischer Festkörperelemente und/oder über mindestens ein elastisches Gelenk geführt ist bzw. sind.

9. Antriebsachse nach einem der vorstehenden Ansprüche, **dadurch gekennzeichnet, dass** der Quotient aus der Masse des Reaktionskörpers (40) einerseits (Zähler) und Masse des Abtriebsteils (18) andererseits (Nenner) zwischen 0,02 und 50 liegt, insbesondere zwischen 0,1 und 10 liegt.

10. Werkzeugmaschine, **gekennzeichnet durch** eine ruckentkoppelte Antriebsachse (10) nach einem der vorstehenden Ansprüche und ein Gestell (16), wobei die ruckentkopppelte Antriebsachse mit dem Gestell (16) fest verbunden ist.

11. Werkzeugmaschine nach Anspruch 10, **gekennzeichnet durch** einen Zusatzmotor (50) zum Aufbringen einer Kraft zwischen Reaktionskörper (40) und Gestell (16).

12. Verfahren zum Betreiben einer Antriebsachse (10) nach einem der Ansprüche 1 bis 9, wobei die Antriebsachse (10) in einer Werkzeugmaschine nach einem der Ansprüche 10 oder 11 eingebaut ist, mit dem zusätzlichen Schritt:
Ansteuern des Motors (28) so, dass der Ruck des Gestells (16) einen voreingestellten Grenzwert nicht übersteigt.

13. Verfahren nach Anspruch 12, mit dem zusätzlichen Schritt:
Erfassen einer Position des Reaktionskörpers (40) relativ zum Abtriebsteil (18) und/oder relativ zum Gestell (16) und Ansteuern des Motors (28) in Abhängigkeit von dieser Position.

## Claims

1. A drive spindle isolated from abrupt movement for a machine tool that has a frame (16), the drive spindle having
(a) a driven element(18),
(b) a reaction body (40) and
(c) an motor (28) to apply a force between the driven element (18) and the reaction body (40),
the reaction body (40) and the driven element (18) being arranged in relation to each other in such a way that, by application of the force, the driven element (18) and the reaction body (40) are moveable in generally opposite reaction directions (R₁ R₂),
the driven element (18) being lead along a guide rail (12) that is designed to be firmly connected to the frame (16) of the machine tool, **characterised by** the fact that the reaction body (40) is guided along the driven element (18) by means of an driven element guide rail (34).

2. The drive spindle isolated from abrupt movement according to claim 1, **characterised by** the fact that the driven element guide rail (34) comprises two guiding elements and one of the guiding elements encompasses the other guiding element.

3. The drive spindle isolated from abrupt movement according to one of the preceding claims, **characterised by** the driven element guide rail (34) being designed to withstand the complete weight force of the reaction body (40).

4. The drive spindle isolated from abrupt movement according to one of the preceding claims, **characterised by** the motor (28) being an electric linear motor (28) that comprises a primary part (26) and a secondary part (30) and the primary part (26) being attached to the driven element (18).

5. The drive spindle isolated from abrupt movement according to claim 4, **characterised by** the drive spindle (10) comprising a linear motor control that is arranged to energise the linear motor (28) in such a way that the distance between the primary part (26) and the secondary part (28) in an x-direction and/or in a y-direction without mechanical guiding lays within a predefined distance interval or within two predefined distance intervals.

6. The drive spindle isolated from abrupt movement according to one of the preceding claims, **characterised by** the driven element (18) being guided linearly along the guiding rail (12).

7. The drive spindle isolated from abrupt movement according to one of the preceding claims, **characterised by** the reaction body (40) being guided exclusively along the driven element (18), particularly linearly.

8. The drive spindle isolated from abrupt movement according to one of the preceding claims, **characterised by** the driven element (18) and/or the reaction body (40) being guided by means of a sliding guide and/or a roller guide and/or a magnetic rail and/or an aerostatic rail and/or a hydraulic rail and/or by means of elastic solid state body elements and/or over at least one elastic joint.

9. The drive spindle isolated from abrupt movement according to one of the preceding claims, **characterised by** the fact that the quotient from the weight of the reaction body (40) on the one hand (numerator) and the weight of the driven element (18) on the other hand (denominator) lays between 0.02 and 50, particularly between 0.1 and 10.

10. A machine tool **characterised by** a drive spindle isolated from abrupt movement (10) according to one of the preceding claims and a frame (16), the drive spindle isolated from abrupt movement being firmly attached to the frame (16).

11. The machine tool according to claim 10, **characterised by** an additional motor (50) to produce a force between reaction body (40) and frame (16).

12. A method to run a drive spindle (10) according to one of the claims 1 to 9, the drive spindle (10) being built into a machine tool according to one of the claims 10 or 11, with the additional step:
Control the motor (28) in a way so that the abrupt movement of the frame (16) does not exceed a pre-defined threshold value.

13. The method according to claim 12 with the additional step:
Capture a position of the reaction body (40) in relation to the driven element (18) and/or in relation to the frame (16) and control of the motor (28) depending on this position.

## Revendications

1. Arbre d'entraînement à découplage de secousses pour une machine-outil possédant un bâti (16), comprenant
(a) une partie entraînée (18),
(b) un corps de réaction (40) et
(c) un moteur (28) pour appliquer une force entre la partie entraînée (18) et le corps de réaction (40),
le corps de réaction (40) et la partie entraînée (18) étant agencés relativement l'un à l'autre de façon que par application de la force la partie entraînée (18) et le corps de réaction (40) soient déplaçables, dans la direction de réaction (R₁, R₂) sensiblement opposée,
la partie entraînée (18) étant guidée sur un rail de guidage (12) qui est réalisé pour être relié fermement au bâti (16) de la machine-outil, **caractérisé en ce que** le corps de réaction (40) est installé sur la partie entraînée (18) au moyen d'un guidage pour corps de réaction (34).

2. Arbre d'entraînement à découplage de secousses selon la revendication 1, **caractérisé en ce que** le guidage pour corps de réaction (34) comprend deux éléments de guidage et l'un des éléments de guidage entoure l'autre élément de guidage.

3. Arbre d'entraînement à découplage de secousses selon l'une des revendications précédentes, **caractérisé en ce que** le guidage pour corps de réaction (34) est formé pour recevoir l'ensemble du poids du corps de réaction (40).

4. Arbre d'entraînement selon l'une des revendications précédentes, **caractérisé en ce que** le moteur (28) est un moteur linéaire (28) électrique qui comprend une partie primaire (26) et une partie secondaire (30) et la partie primaire (26) est fixée à la partie entraînée (18).

5. Arbre d'entraînement selon la revendication 4, **caractérisé en ce que** l'arbre d'entraînement (10) comprend un pilotage de moteur linéaire qui est agencé pour alimenter en courant le moteur linéaire (28) de façon que la distance entre la partie primaire (26) et la partie secondaire (28), dans une direction x et/ou dans une direction y, soit compris dans un intervalle de distances prédéterminé ou respectivement compris dans deux intervalles de distances prédéterminés, sans guidage mécanique.

6. Arbre d'entraînement selon l'une des revendications précédentes, **caractérisé en ce que** la partie entraînée (18) est guidée linéairement sur le rail de guidage (12).

7. Arbre d'entraînement selon l'une des revendications précédentes, **caractérisé en ce que** le corps de réaction (40) est guidé exclusivement sur la partie entraînée (18), en particulier linéairement.

8. Arbre d'entraînement selon l'une des revendications précédentes, **caractérisé en ce que** la partie entraînée (18) et/ou le corps de réaction (40) est ou sont guidé(s) au moyen d'un guidage à glissement et/ou un guidage à roulement et/ou un guidage magnétique et/ou un guidage aérostatique et/ou un guidage hydraulique et/ou au moyen d'éléments à corps solides élastiques et/ou par l'intermédiaire d'au moins une articulation élastique.

9. Arbre d'entraînement selon l'une des revendications précédentes, **caractérisé en ce que** le quotient de la masse du corps de réaction (40) d'une part (numérateur) et de la masse de la partie entraînée (18) d'autre part (dénominateur) vaut entre 0,02 et 50, en particulier entre 0,1 et 10.

10. Machine-outil, **caractérisée par** un arbre d'entraînement (10) à découplage de secousses selon l'une des revendications précédentes et un bâti (16), dans laquelle l'arbre d'entraînement à découplage de secousses est fermement relié au bâti (16).

11. Machine-outil selon la revendication 10, **caractérisée par** un moteur additionnel (50) pour appliquer une force entre le corps de réaction (40) et le bâti (16).

12. Procédé pour exploiter un arbre d'entraînement (10) selon l'une des revendications 1 à 9, l'arbre d'entraînement (10) étant incorporé dans une machine-outil selon l'une des revendications 10 ou 11, comprenant l'étape supplémentaire de :
pilotage du moteur (28) de façon que la secousse du bâti (16) ne dépasse pas une valeur limite préréglée.

13. Procédé selon la revendication 12, comprenant l'étape supplémentaire de :
détection d'une position du corps de réaction (40) par rapport à la partie entraînée (18) et/ou par rapport au bâti (16) et pilotage du moteur (28) en fonction de cette position.
